# EUROPEAN PATENT SPECIFICATION

(11) **EP 4 464 153 B1**
(45) Date of publication and mention of the grant of the patent: **10.12.2025**
(21) Application number: 24172136.4
(22) Date of filing: 24.04.2024
(51) Int. Cl.: A01K 39/02

(54) **DRINKING NIPPLE**
TRÄNKEVENTIL
SOUPAPE D'ABREUVOIR

(30) Priority: 15.05.2023 FR 2304788
(43) Date of publication of application: 20.11.2024
(73) Proprietor: Aliaxis Research & Technology, 78990 Élancourt (FR)
(72) Inventor: Delair, Vanessa, 78990 Elancourt (FR); Costa, Stefano, Genova (IT); Rey, Charlotte, 78990 Elancourt (FR); Giachero, Davide, Genova (IT); Zanni, Rodolfo, Genova (IT); Coty, Veronique, 78990 Elancourt (FR); Sonzogni, Filippo, Genova (IT)
(74) Representative: Sonnenberg Harrison Partners

(56) References cited:
- EP-A1- 0 554 884
- DE-A1- 102006 058 663
- DE-A1- 102007 044 659
- DE-B3- 102012 011 190
- US-A- 4 890 578

## Description

### TECHNICAL FIELD

The present invention relates to the field of animal farms. More precisely, the present invention relates to a drinking nipple for an animal farm.

### PRIOR ART

In animal farms, such as chickens' farms and specifically for broilers farms, the quality of the water in key to support animal's growth, reduce bacteria spreading and reduce the use of antibiotics.

Water is a key component of the chicken body's composition, and its quality has a big impact on its health.

Currently, the water quality systems in place in chickens' farms are quite standard responding to local requirements and specific guidelines given by the owner of the farms. The water is mainly coming from the tap network or from wheels sometimes. This water is carried out through a pipe assembly system leading to a plurality of drinking systems. The pipe assembly system is made of thermoplastic pipes and the drinking systems consist of nipples to which the chicken can come to drink.

During the cycle's growth of the animals, the water line in the drinking system is moved from down to up according to the growth speed of the chickens to allow them to reach the nipples and drink in a proper way.

In operation, vitamins, nutrients and disinfectants are also added to the water to help the chickens' growth and to prevent any contamination.

Document EP 0 554 884 teaches a drinking nipple according to the preamble of claim 1.

It is an object of the present disclosure to provide a drinking nipple and a water supply system which reduces the risk of water contamination and ensures a water flow rate at each point of use.

It is an object of the present disclosure to provide a drinking system which is easy to install.

### SUMMARY OF THE INVENTION

These and other objects of the present invention are achieved by a drinking nipple according to claim 1. The drinking nipple is to be inserted into a supply pipe, comprising a housing extending along a longitudinal body axis, the housing having a longitudinal pass-through hole forming a water passage between an inlet and an outlet, the housing having an upper part to be inserted into the supply pipe for the inlet of water, a valve within the housing, designed to block the flow of water through the pass-through hole, a flow control element inserted into the housing above the valve, and an outer circular sealing and holding gasket on the upper part of the housing. The flow control element is a cartridge which is removably inserted into the housing. Protective means are provided at an upper end of the outer circular sealing and holding gasket that keep the cartridge in the housing to avoid fall-out or damage of the cartridge during transport and installation.

Preferably, the outer circular sealing gasket has a circumferential protrusion extending radially outwards from the gasket body, in particular wherein the circumferential protrusion is a holding element holding the drinking nipple in place when the drinking nipple is inserted into a supply pipe.

In one aspect, the outer circular sealing gasket has a gasket body extending between an upper end to be inserted into a supply pipe and a lower end with a bottom edge, wherein the bottom edge has an upper outer surface provided to rest against the outer surface of a pipe wall and a lower outer surface provided to abut against the drinking nipple housing inserted inside the circular sealing gasket. The circumferential protrusion is located at a distance from the upper outer surface of the bottom edge corresponding to a thickness of the supply pipe wall in which the drinking nipple is to be inserted.

In one aspect, the circumferential protrusion has a curved profile with a convex inner surface forming an inner groove. Preferably, the inner surface has an inner curvature radius and the circumferential protrusion has a curved outside surface with an outer curvature radius, the inner curvature radius being smaller than outer curvature radius.

In yet another aspect, the drinking nipple has a positioning element indicating that the gasket is correctly assembled on the drinking nipple and/or that the drinking nipple is correctly inserted into a supply pipe, in particular wherein the drinking nipple has a lower part designed to protrude from the pipe when the drinking nipple is mounted to the pipe lower part, the upper part and the lower part being connected by an annular edge or flange extending radially from the drinking nipple body.

In a further aspect, the upper end of the sealing gasket is provided with a protection arrangement, wherein the protection arrangement comprises at least one flexible arms partly covering the supply portion, provided at a vertical distance from the upper end and providing a central passage of diameter less than a cartridge diameter and which can be opened by a force exerted during insertion or removal of a cartridge.

The valve may comprise a ball designed to block the flow of water and a valve pin. In an aspect, the housing comprises a bush having inner ends defining a conical valve seat on which the ball rests, a hollow bush body extending between said inner ends and the outlet, and an annular edge extending radially inwards towards the water passage at the outlet, wherein the valve pin is movably inserted in the bush, the valve pin having an enlarged head and a pin body extending from the enlarger head and protruding externally from the bush.

In a closed position of the valve, the enlarged head of the valve pin can rest on the annular edge and the ball rests on the ball receiving seat, and wherein the valve is opened by raising and/or tilting the valve pin to at least partly lift the enlarged head off said annular edge.

In an aspect, at least one of the ball, the bush and the valve pin are made of stainless steel.

In yet another aspect, a diameter of the cartridge can be chosen to adapt to a chosen flow.

Advantageously, the cartridge is removable from the housing independently from the nipple. With other words, the cartridge can be removed form the housing whilst the nipple remains in place, the nipple being held by the outer circular sealing gasket. This allows easily changing the cartridge, e.g. for adapting to another required water flow, or to change an old cartridge with a new cartridge with antibacterial agent.

Advantageously at least one among the cartridge and the housing body is made of a thermoplastic material with an antibacterial agent, or wherein the antibacterial agent is in the mass of the thermoplastic material.

The system is efficient in use. The drinking system has a high reactivity due to the vertical alignment of the different elements.

The system is versatile, it allows removal and replacement of certain parts of the drinking nipple without replacing the full nipple. Where known systems require a new nipple when a different flow rate is required, the present invention requires only the flow regulator element, e.g. a cartridge, to be replaced by a version with a different diameter.

It helps avoiding stagnant water.

The system is easy to install and manage. The design of the rubber gasket makes placement and removal of the drinking nipple easy, while ensuring strong watertightness during use. The shape of the anti-removal part of the gasket, consisting of a rib at the outer side and a groove at the inner side ensures a high elasticity and flexibility of the anti-removal part. The shape of the rib ensures that the nipple is securely fixed in the pipe aperture, while its flexibility allows efficient insertion and pull-out. The rubber gasket comprises protective means at the upper end that keep the flow regulator cartridge in the nipple body to avoid fall-out or damage of the flow regulator cartridge during transport and installation.

The system also provides for safer operation and ease of installation as the mating geometric elements provide for an anti-rotation protection, such that the vertical arrangement will never be jeopardized.

The system is efficient in use. For the chickens to be able to drink efficiently from the nipples at any position around the nipple, the nipples need to provide the same flow rate at each degree of the 360° circle of access. These 360° systems are prone to leaking as a result of the water pressure in the pipes in which the nipples are inserted. The present invention provides a system with a high watertightness immediately after the nipple is accessed for drinking by a chicken.

The system has antibacterial qualities. The flow regulator cartridge comprising an antibacterial agent has a guaranteed effect of the antibacterial agent due to its mobility upon actuation of the nipple, which keeps it from scaling.

### DESCRIPTION OF THE DRAWINGS

The invention is described hereinafter with reference to the enclosed drawings 1 to 13, in which:
[Fig. 1] is an overview of a water supply network according to the present disclosure,
[Fig. 2] is a drinking nipple according to the present invention;
[Fig. 3] is a detailed view of the drinking nipple, according to the present disclosure;
[Fig. 4] is a detailed view of the drinking nipple, according to the present disclosure;
[Fig. 5] is a detailed view of the drinking nipple, according to the present disclosure;
[Fig. 6] is a detailed view of the drinking nipple, according to the present disclosure;
[Fig. 7] is a detailed view of a gasket for the drinking nipple of Figures 2 to 6, according to the present disclosure;
[Fig. 8] is a view of a water supply assembly, according to the present disclosure;
[Fig. 9] is a water supply assembly according to another aspect of the present disclosure;
[Fig. 10] is a detailed view of the water supply assembly of Fig. 8 according to the present disclosure;
[Fig. 11] is a detailed view of elements of a water supply assembly according to the present disclosure;
[Fig. 12] shows a detailed view of elements of the water supply assembly of Fig. 9 according to the present disclosure;
[Fig. 13] shows the mounting steps of a water supply assembly according to the present disclosure.

### DETAILED DESCRIPTION

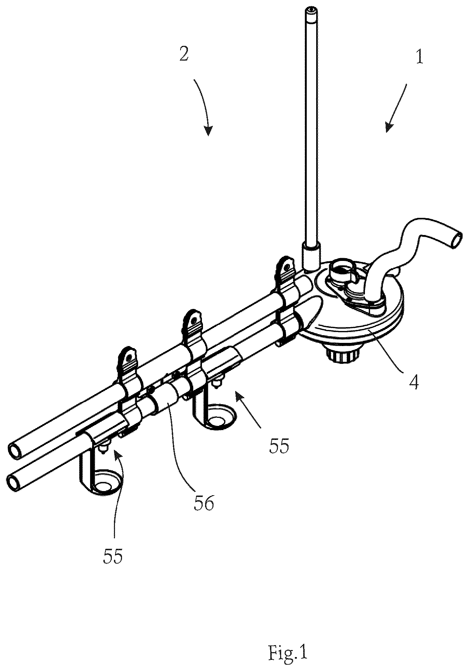

Fig.1 illustrates a water supply network 1 according to the present disclosure.

The water supply network 1 comprises a water supply line 2 comprising a plurality of water supply systems 55 interconnected with fittings 56. The plurality of water supply systems 55 have a plurality of drinking nipples 10 allowing the chickens to drink.

The water supply line 2 is fed by one or more water sources 3 (not shown). A water panel can be located between the water source and the water supply line 2. For example, the water source is located spatially in one room and the water supply line 2 is located in a growth room where all animals are present.

A pressure regulator 4 can be provided downstream of the water source 3 to supply the drinking nipples 10 with a pressure within the operating pressure of the drinking nipples.

In the example of Fig.1, only one water supply line is shown. Of course, a water supply network can have as many water supply lines as needed depending on the needs, connected to a single source or a plurality of water sources, with one or more pressure regulator at the input of the water supply lines.

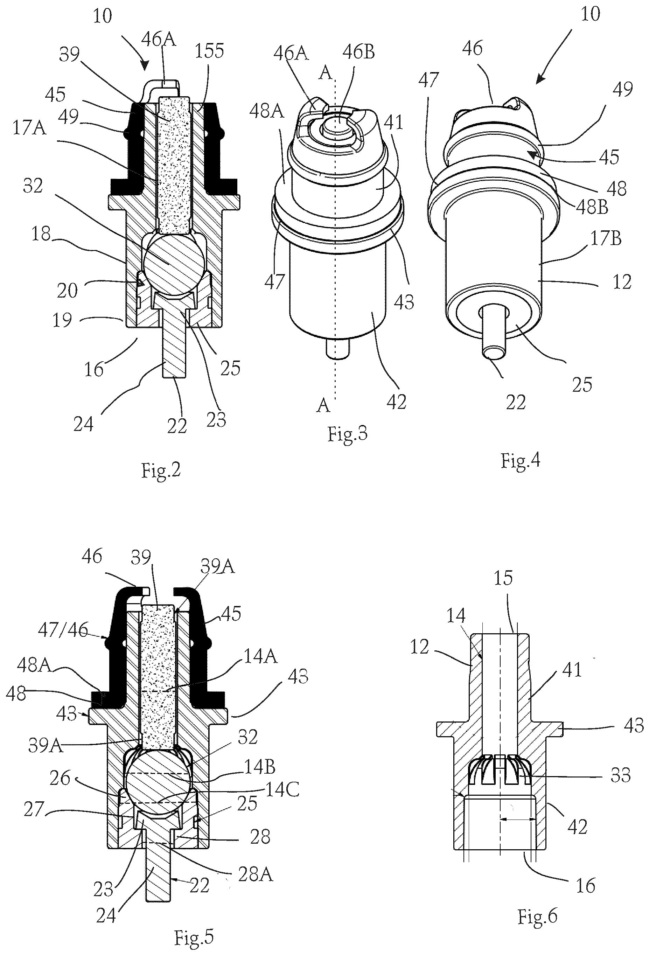

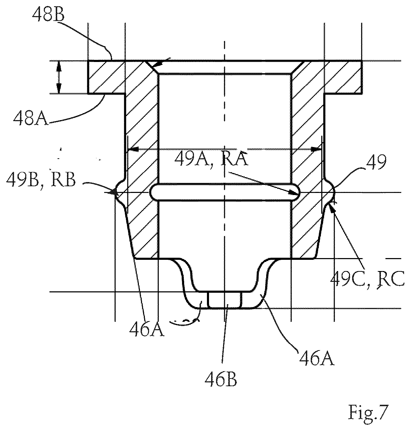

The drinking nipple 10 will now be described in details with reference to Fig.2 to Fig.7.

The drinking nipple 10 comprises a housing 12 extending along a longitudinal body axis A-a, having a longitudinal pass-through hole 14 forming a water passage between an inlet 15 and an outlet 16.

A valve 20, comprising a valve pin 22 and a ball 32, is provided within the housing 12 designed to block the flow of water through the pass-through hole 14.

The housing 12 comprises a supply portion 17A extending from the inlet followed by a valve receiving part 17B for housing the valve 20 made of a ball 32 and a valve pin 22.

The valve receiving part 17B comprises a ball receiving part 18 followed by a bush receiving part 19 extending to the outlet 16.

The pass-through hole 14 has a first diameter 14A in the supply portion 17A, a second diameter 14B in the ball receiving part 18 and a third diameter 14C in the bush receiving part 19. The first diameter 14A is the smallest and the third diameter 14C is the largest. It could be envisaged that the first diameter 14A of the supply portion 17A and the second diameter 14B of the ball receiving part 17B are equal.

A bush 25 is provided within the bush receiving part 19. The bush 25 has inner ends defining a conical valve seat 26, a hollow bush body 27 extending between said inner ends 26 and the outlet 16, and an annular edge 28 at the outlet 16. The edge 28 extends radially inwards towards the water passage.

The bush 25 is shown as a part distinct from the nipple housing. However, this is not limiting, and the bush can be made in a single piece with the nipple housing.

The valve pin 22 is movably inserted in the bush body 27. The valve pin 22 has an enlarged head 23 and a pin body 24 extending from the enlarger head 23 and protruding externally from the bush 25. The enlarged head 22 seats on the annular edge 28 of the bush.

The pin body 24 has a pin diameter less than the inner edge diameter 28A so as to provide a clearance flow passageway. Additionally, in the shown embodiment and according to a particularly preferred embodiment the clearance is dimensioned such that the pin can be tilted in the clearance sufficiently to allow to open the valve, i.e. the ball can be lifted from its seat by any movement impaired to the valve pin. This allows for the animal in any state of the growing and in any position to easily operate the drinking nipple without any need to push the pin directly vertically.

The valve pin 22 forms, together with the ball 32, a valve 20 which may be opened by raising the valve pin 22 to lift the enlarged head 23 of the valve pin 22 off said annular edge 28 or by tilting the valve pin 22 to lift a part of the pin head 23 off said annular edge.

The ball 32 is provided in the ball receiving part 18. The ball 32 rests in the closed position on the conical valve seat 26 and is lifted off the valve seat 26 by the valve pin 22 when the valve pin 22 is lifted and/or tilted to come off the annular edge 28.

**In** other words, the ball 32 normally rests on the valve seat 26 and urges the enlarged head 23 of valve pin 22 towards the annular edge 28, to block the flow of water through the bush 25 and the outlet 16 of the housing 12. However, when the pin 22 is tilted or lifted by a chicken, the enlarged head 23 unseats the ball 32 from the valve seat 26, and thereby permits the flow of water via the clearance 28 of the nipple assembly to and through the outlet 16.

The assembly of the ball, bush and pin is designed to avoid leakage, as well as obtaining good hydraulic performances.

As can be seen on Fig.6, ribs 33 are provided on the upper part of the ball receiving part 18 to allow the flow of water when the ball is lifted up in the ball receiving part 18. With other words, the ribs 33 avoid that the ball seats and block the passage of water from the supply portion.

A flow control element 39 is inserted within the supply portion 17A of the drinking nipple to regulate the flow of water. The flow control element is a cartridge 39 removably inserted within the supply portion 17A of the drinking nipple.

The cartridge 39 is provided for restricting the flow of water from the water supply pipe 2 to the valve seat 23 of the drinking valve. In addition, the cartridge may be in a thermoplastic material, for example PVC with an antibacterial or antimicrobial agent, as an anticontamination agent.

The cartridge 39 can be easily replaced to adapt the flow of water to chicken needs, along the growth cycle of the chicken or adapted to the needs of other animals (hens, ...), or to change the cartridge in order to refresh the action of the anticontamination agent. Whenever chicken needs change, the current cartridge can be removed and a new cartridge with another diameter adapted to the flow requirements can be chosen.

In order to facilitate removal of the cartridge, the cartridge is designed to be longer than the length of the supply portion 17A, so that the cartridge protrudes from the supply portion 17A.

In addition, the cartridge 39 allows avoiding stagnating water when the chicken stops drinking. The cartridge 39 is of cylindrical shape with a diameter chosen such that there is a clearance gap allowing the flow of water in the drinking nipple 10. The clearance can be adjusted by changing the cartridge 39 toward one having a smaller diameter. The clearance is preferably having a radial length in the range of 1% to 20%, preferably in the range of 2% to 5% of the diameter of the supply portion 17A.

As can be seen on fig.5, the cartridge can have one end portion 39A, preferably both end portions 39A, with a reduced diameter less. This reduced diameter is used for compensating for defects which can arise during the moulding of the drinking nipple housing 12, in particular at the upper end of the housing. When the cartridge has a reduced diameter on both end portions, there is no insertion direction for inserting the cartridge inside the drinking nipple.

It should be noted that the end portion with a reduced diameter is long enough so that, when the ball has been lifted up in the upper possible position against the ribs 33, the end portion of reduced diameter is still partly inserted into the housing, with the cartridge in this upper position.

The drinking nipple 10 is configured to be inserted into the water line 2, in particular into a hole in the water pipe.

An outer circular sealing gasket 45 is provided to ensure both the sealing of the drinking valve mounted to the drinking line as well as the fixation by providing sufficient engagement with the tube, once inserted so as to be blocked and to support water pressure within the tube, without the risk of coming loosened inadvertently. On the other hand, the sealing gasket is configured so as to allow the nipple to be removably retained to the tube. In other words when replacement of a nipple is needed the drinking nipple can be mechanically pulled out of the receiving bore.

The circular sealing gasket may be provided as a single piece mounted on the housing body 12 or may be provided as a separate element.

The outer circular sealing gasket 45 has a gasket body to be inserted into a pipe, extending between an upper end 46 to be inserted into the pipe and a lower end 47 with a bottom edge 48.

The bottom edge 48 has an upper outer surface 48A provided to rest against the outer surface of the pipe wall, indicating the correct insertion of the gasket into the pipe.

The drinking nipple has an upper part 41 on which the outer circular sealing gasket 45 mounted, which have an outer diameter allowing the snap fit insertion into the pipe. The drinking nipple has a lower part 42 designed to protrude from the pipe when the drinking nipple is mounted to the pipe. The upper part 41 and the lower part 42 are connected by an annular edge or flange 43 extending radially from the drinking nipple body.

The drinking nipple housing 12 is inserted inside the circular sealing gasket 45 until the annular edge 43 is abutting against a lower outer surface 48B of the sealing gasket 45.

The housing annular edge or flange 43 is a positioning element, to indicate both that the gasket is correctly assembled on the drinking nipple, and/or that the drinking nipple with the gasket are correctly inserted into the supply pipe.

The outer circular sealing gasket 45 has a circumferential protrusion 49 extending radially outwards from the gasket body. The circumferential protrusion 49 is located at a distance from the upper outer surface 48A of the bottom edge 48 corresponding to the thickness of the pipe wall in which the drinking valve and the gasket are to be inserted. Thus, when the gasket is inserted into the pipe, the circumferential protrusion 49 is inside the pipe, just above the pipe wall. In charge, when water is flowing, the circumferential protrusion 49 is pressed against the pipe wall. This ensures both the sealing and the holding of the gasket and the drinking nipple in place.

With other words, the circumferential protrusion 49 of the sealing gasket 45 is a holding element holding the drinking nipple in place when the drinking nipple is inserted into the supply pipe.

The circumferential protrusion 49 has preferably a curved profile designed to enhance the compression of the circumferential protrusion 49 against the pipe wall under water charge.

The inner surface 49A of the circumferential protrusion 49 is convex. The convexity of the inner surface contributes to the crushing of the protrusion under the water load. The convexity of the inner surface allows provides room for the protrusion during the insertion into the pipe or removal of the gasket from the pipe, thereby preventing the tearing off the gasket.

It should be noted that the curvature radius RA of the inner surface 49A is preferably smaller than the curvature radius RB of the outer surface of the protrusion 49, to support the water pressure in operation.

In addition, the lower outside surface 49C of the circumferential protrusion 49 has a curvature radius RC allowing insertion into the pipe of the gasket and avoiding that the protrusion is damaged or even cut during insertion of the gasket into the pipe.

The external diameter of the circumferential protrusion 49 of the gasket preferably is preferably % to 15% bigger than the external diameter of the gasket body, to ensure that the gasket is hold in place in operation.

The upper end 46 of the sealing gasket 45 is provided with a protection arrangement 46A to prevent unwanted removal of the cartridge from the drinking nipple 10. The protection arrangement keeps the cartridge in place during transportation and assembly. The protection arrangement comprises two flexible arms partly covering the supply portion, provided at a vertical distance from the upper end 46 being bigger than the maximal protrusion distance of the cartridge, to allow movement of the cartridge 39 up and down under normal operation of the valve, but stopping movement of the cartridge whenever the cartridge would slip outside from the supply portion, e.g. if the drinking nipple is upside down or when rotating the nipple.

It should be noted that the two arms 46A are not covering the supply portion over the entire diameter of the supply portion, but still provide a central passage 46B of diameter less than the diameter of the smallest cartridge. Therefore, even the smallest foreseen cartridge with the smallest foreseen diameter can be blocked and prevented from accidental removal once inserted into the drinking nipple. On the other hand, the flexibility of the two arms results in the possibility to open the passage and force the insertion or removal of the cartridge during insertion, respectively removal, of the cartridge.

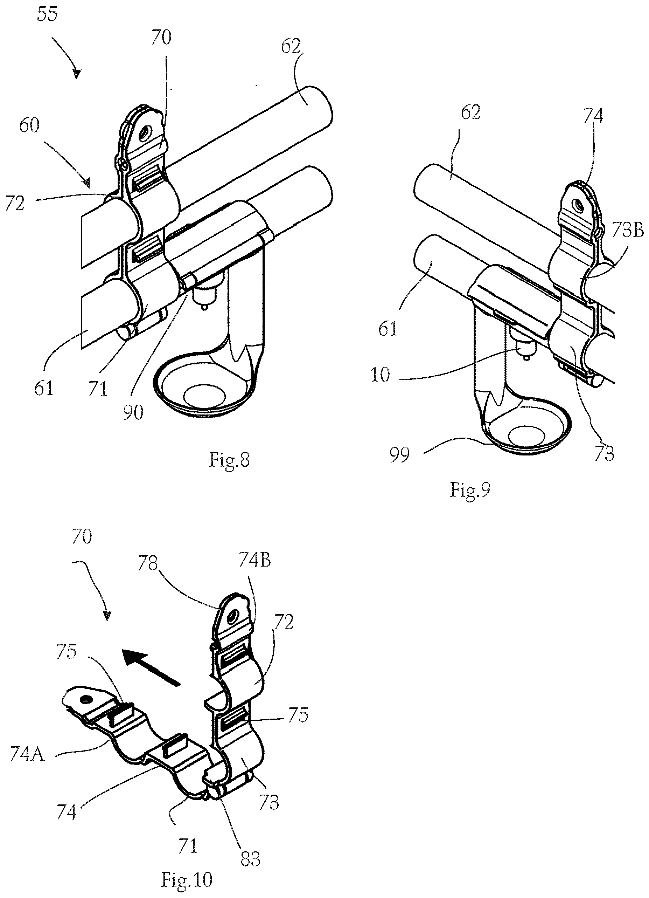

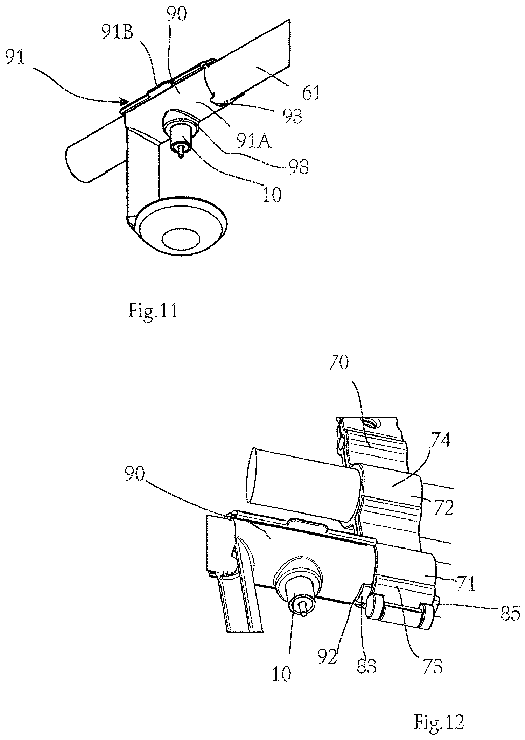

Referring back to Fig.1, the plurality of drinking nipples 10 are connected to the water supply line 2 with a plurality of water supply assemblies 55. The water supply assembly 55 is detailed with reference to Fig.9 to Fig. 13.

The water supply assembly 55 comprises a pipe clamp 70 and an alignment holder 90.

The pipe clamp 70 comprises a clamp body 74 with a first clamping element 71 and a second clamping element 72 spaced apart from the first clamping element 71. Therefore, the pipe clamp is a double pipe clamp, which can hold a first pipe 61 and a second pipe 62.

The first clamping element 71 and the second clamping element 72 have a clamping ring 73, 73B, for clamping the first and second pipes, respectively. The first and second clamping elements 71, 72 have a width sufficient to ensure that the pipes are maintained parallel.

In the example shown on the figures, the clamp body 74 is made of two clamp body halves 74a, 74b which are articulated at one end of the clamp body 74, to open or close the clamp body. In the closed position, the two halves 74a, 74b are joined together to close the first and second clamping elements 71, 72.

To this end, cooperating closing members 75A, 75B are provided on the clamp body halves to hold the clamp body 74 in the closed position.

A user can receive a pipe clamp 74 provided in an open position or can open the pipe clamp 74, place the first and second pipes on one pipe claim half, and close the pipe clamp 74, so that the first and second pipes are encircled by the first and second clamping elements respectively.

In operation, the clamp body 74 is extending in the vertical direction and the clamping element and the second clamping element are vertically aligned. In turn, the two pipes 61, 62, are aligned in a vertical plane. The first pipe 61 is the water supply pipe. The second pipe 62 is the upper pipe and can be used to avoid that chicken sits on the lower pipe.

One or more fixation holes 78 are provided on the upper end of the clamp body 74, to fix the system to the ceiling and to allow adjusting the position of the drinking system and hence of the drinking nipple to the size of the chicken, during the chicken's growth. Height adjustment can be done manually.

The water supply assembly 55 also comprises an alignment holder 90, to help assembling and aligning the pipe clamp 70, the water supply pipe or first pipe 61, the drinking nipple 10, and when needed, the second pipe 62 and a cup 99 to collect water falling from the drinking nipple when the chicken drinks. The alignment of the different elements ensures that, in operation once the system is fixed to the ceiling, the pipe clamp 70 and the drinking nipple 10 inserted into the water supply pipe 61, as well as and of the cup 99, if present, are aligned vertically, with the first pipe and the second parallel pipe also aligned in the vertical plane.

The alignment holder 90 comprises an alignment holder body 91 is in the form of an extended annular ring or cylinder, and which, in operation, is provided to encircle the first pipe 61.

The alignment holder body 91 comprises two articulated body parts 91A, 91B, which can be open or joined together to form a pipe clamp clamping the first pipe 61.

The alignment holder body 91 comprises an alignment holder hole 98, for the passage of the drinking nipple 10 inserted into the first pipe 61. The alignment holder body 91 is larger than the drinking nipple 10 and serves as a protection for the drinking nipple 10.

The alignment holder 90 also serves as well as cup holder, to fix the cup 99.

A mating positioning arrangement is provided to help assembling the water supply system 55.

The mating positioning arrangement comprises one or more recesses and protrusions on the pipe clamp 70 and alignment holder 90.

In the example shown, a first positioning protrusion 83 extends from the clamping ring 73 of the first pipe element 71. The first positioning protrusion 83 extends laterally, in an orthogonal manner from the clamping ring 73. Thus, the positioning protrusion 83 extends parallel to the first pipe 61 when the pipe is inserted into the clamping ring 73.

The first positioning protrusion 83 is provided to cooperate with a positioning recess 92 in the alignment holder 90 designed to mate with the positioning protrusion 82. Of course, this is not limiting the invention and the positioning ring may be provided on the holder body and the mating hole on the lamping element.

The positioning elements and the arrangement of the pipe clamp ensures that, in operation, the pipe clamp 70 with the first and second clamping elements 71, 72, are vertically aligned, as well as the drinking nipple inserted in the second pipe and, if a cup 99 is provided, the cup 99.

Preferably the water supply system 55 can have a length of maximum 5 meters. A length of a few meters such as 2-4 meters allows keeping a good rigidity and robustness to the overall supply line.

The water supply systems 55 are interconnected with fittings 56, preferably the fittings 56 are push-fits fittings. A second positioning protrusion 84 extending from the clamping element 72 and/or a third positioning protrusion 85 extending from the first clamping element 71 are provided. The second positioning protrusion 84 and third positioning protrusion 85 extend in a lateral direction opposite to the first positioning protrusion 83 and are provided for indicating that pipe system 60 is correctly inserted into the fitting 56.

With other words, the second positioning protrusion 83 and/or third positioning protrusion 84 allows correct pipe insertion control, during insertion of the pipe into the fitting (push-fit). It is advantageous to know that the pipes are well inserted, i.e. until the protrusion is in contact with the fitting.

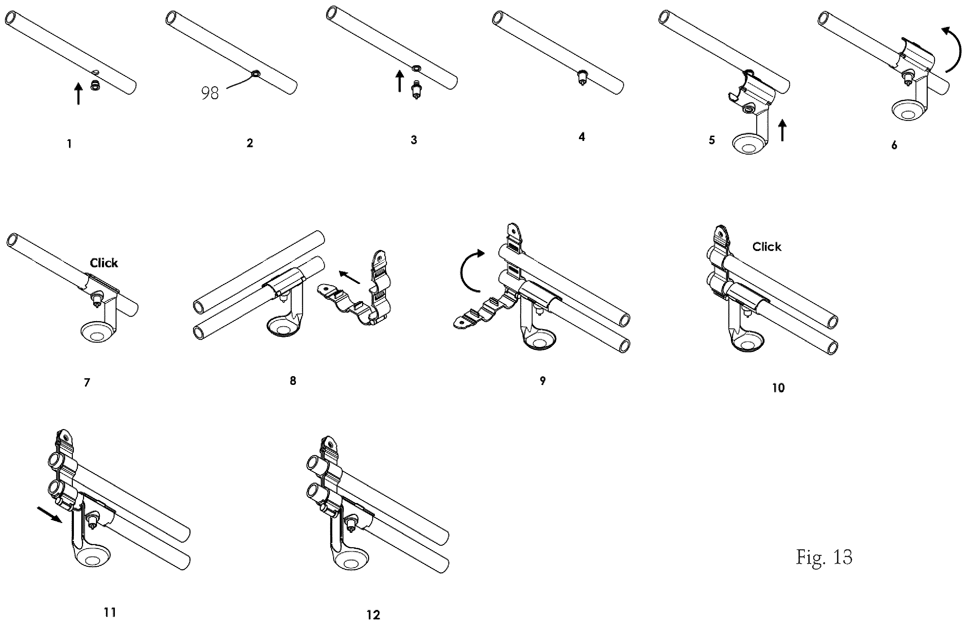

The assembly of the water supply system 55 is illustrated on Fig. 13, as follows:
First, the drinking nipple 10 is inserted into the first pipe 61, as seen on steps 1 to 3. On the figure, the sealing gasket 45 is first inserted and then the drinking nipple 10, but it is also possible to have the drinking nipple with its outer gasket 45 and insert directly both the gasket and the nipple.

In a next step, the alignment holder 90 is mounted on the first pipe 61. To do so, the alignment holder 90 is opened, to allow the passage of the drinking nipple into the holder hole 98 and the sliding of alignment holder 90 around the drinking nipple 10 towards the first pipe 61, as seen on steps 5 and 6. At this stage, the alignment holder 90 is lying against the first pipe 61 and it is possible to close the alignment holder 90 around the pipe 61 (step 7).

Then, the user can mount the pipe clamp 70 on the first pipe 61. To this end, the user positions the first pipe 61 on the clamping element 71, and when needed, the second pipe on the second clamping element 72, at steps 8 and 9, and closes the clamp body 74 at step 10.

Finally, the user aligns the pipe clamp 70 with the alignment holder 90. To this end, the user can slide the alignment holder 90 or the pipe clamp 70 until the positioning protrusion and hole in the double pipe clamp and the holder fits together, like puzzle pieces, at steps 11 and 12. If needed, the user may turn the first pipe 61 to a position allowing the mating engagement of the pipe clamp and positioning holder.

It is noted that this is only possible that the pipe clamp 70 and the alignment holder 90 fits together when the drinking nipple 10 is positioned vertically, extending downwardly vertically from the first pipe 61 when the system is fixed to the ceiling.

Therefore, the skilled person understands that the arrangement of the pipe clamp 70 and alignment holder 90 gives the vertical alignment of the system. The mating positioning system ensures a vertical position alignment of both the pipe clamp 70 and of the drinking nipple 10 inserted into the water supply pipe 61, as well as and of the cup 99, if present.

If first nipple is aligned, all the others will be vertical as well, and the drinking nipples work better. With other words, once the drinking nipple is aligned, all the other elements are aligned as well.

The verticality has a positive effect on the reactivity of the drinking nipple 10. In particular, a good vertical alignment is good for water pressure control.

It should be noted that the pressure regulator 4 is also preferably designed to allow centering of the pressure regulator 4 in the vertical direction and improve the verticality of the water line with the pressure regulator 4.

The pressure regulator 4 preferably is provided with the solenoid valve centered on top of the pressure regulator.

With other words, instead of having the pressure regulation elements with the flushing elements with different weights located outside of the vertical plane urging the system out-of-balance , the pressure regulator is self-centered to be aligned vertically or at least have its barycenter aligned in the vertical plane.

The drinking nipple 10 is protected by the alignment holder 90, but the drinking nipple 10 is maintained in the pipe via its outer gasket 45. It is therefore possible to remove the alignment holder 90 once everything has been properly fixed and aligned. The cup 99 can be removed if necessary, the water supply system 50 remains in place.

The water supply system 55 is easy to install. The drinking nipple can be simply inserted into the pipe. The alignment holder 90 and the pipe clamp 70 are ensuring both correct assembly and positioning of the different elements, as well as protecting the drinking nipple 10.

An anti-perching device may be fixed above, at distance from the pipes, but this is optional. The anti-perching device may be a metal bar but other anti-perching devices are contemplated, such as a turning system so the chickens cannot sit on the water pipe, and preferably not on the second pipe as well, when present.

The different elements of the system are chosen from material chosen to lower the risk of contamination.

Antibacterial material is provided for the elements in contact with the drinking water.

The pipes 61, 62 can be made of a thermoplastic material, for example PVC or c-PVC with an antibacterial material. The pipe clamp and holder, as well as the nipple housing can be in a thermoplastic material, for example polypropylene (PP) with an antibacterial material. The cartridge may be in a thermoplastic material, for example PVC with an antibacterial material.

The antibacterial element is not provided as a coating only but is provided in the mass. The antibacterial element is preferably homogenously added to a thermoplastic material, for example PP or the PVC.

Having the antibacterial element in the mass provides a tremendous advantage as compared to having a coating, only, as the risk of a deteriorated coating and the risk of leaching in the water can be excluded

A non-limiting example of an anti-bacterial element is silver.

The ball, valve pin and bush are preferably made of stainless steel which is inherently hygienic material.

The gasket is preferably made of rubber/EPDM for the gasket, to fix the nipple into the pipe.

Overall, the present disclosure teaches a system diminishing water contamination. The presence of stagnating water is avoided, the material of the different components leads to less formation of biofilm in the pipes and less bacteria. In turn, this improvement allows reducing the use of antibiotics, the need to flush the system, as well as the needs in chemical for disinfection. It results in less sickness or mortality of the chickens, as well as a more environmentally friendly system, using less water and less chemical/antibiotic treatment.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto.

### List of reference numbers:

Supply line 2
Water source 3
drinking nipple 10
Housing 12
longitudinal body axis A-A,
14 pass-through hole,
first diameter 14A, a second diameter 14B a third diameter 14C
inlet 15
outlet. 16
supply portion17A
valve receiving part 17B
ball receiving part 18
bush receiving part 19
valve 20
valve pin 22
enlarged head 23
pin body 24
bush 25
inner ends defining a conical valve seat 26
a hollow bush body 27
annular edge of the bush 28
ball 32
cage 33
cartridge 39
housing insertion part 41
housing lower part 42
housing body flange/edge 43
outer circular sealing gasket 45
upper end 46
anti removal/protection arms 46A, cartridge passage 46B
lower end 47
bottom edge 48 with a lower outer surface 48 B and an upper surface 48A
circumferential protrusion 49
inner surface 49A outer surface 49B lower outer surface 49C
curvature radius RA, RB, RC
water supply system 55
pipe system 60,
first pipe 61
second pipe 62
anti-sitting system 65
a pipe clamp 70
first clamping element 71
second clamping element 72
clamping ring 73
clamp body 74
Fixation holes 78.
Positioning protrusion 83
positioning protrusion 84
positioning protrusion 85
alignment holder 90.
Alignment holder body 91
positioning hole 92
holder hole 98
Cup 99

## Claims

1. Drinking nipple (10) to be inserted into a supply pipe, comprising
a housing (12) extending along a longitudinal body axis, the housing having a longitudinal pass-through hole (14) forming a water passage between an inlet (15) and an outlet (16), the housing having an upper part to be inserted into the supply pipe for the inlet of water,
a valve (20) within the housing (12), designed to block the flow of water through the pass-through hole (14),
a flow control element (39) inserted into the housing above the valve (20),
an outer circular sealing and holding gasket (45) on the upper part of the housing,
**characterized in that**
the flow control element (39) is a cartridge which is removably inserted into the housing, and protective means are provided at an upper end of the outer circular sealing and holding gasket (45) that keep the cartridge in the housing (12) to avoid fall-out or damage of the cartridge during transport and installation.

2. Drinking nipple according to claim 1, wherein the outer circular sealing gasket (45) has a gasket body extending between the upper end (46) to be inserted into a supply pipe and a lower end (47) with a bottom edge (48), wherein the bottom edge (48) has an upper outer surface (48A) provided to rest against the outer surface of a pipe wall and a lower outer surface (48B) provided to abut against the drinking nipple housing (12) inserted inside the circular sealing gasket (45).

3. Drinking nipple according to claim 1 or 2, wherein the outer circular sealing and holding gasket (45) has a circumferential protrusion (49) extending radially outwards from the gasket body, in particular wherein the circumferential protrusion is a holding element holding the drinking nipple in place when the drinking nipple is inserted into a supply pipe

4. Drinking nipple according to claim 3, wherein the circumferential protrusion (49) is located at a distance from the upper outer surface (48A) of the bottom edge (48) corresponding to a thickness of the supply pipe wall in which the drinking nipple is to be inserted.

5. Drinking nipple according to any of claims 2 to 4, wherein the circumferential protrusion (49) has a curved profile with a convex inner surface (49A) forming an inner groove.

6. Drinking nipple according to claim 5, wherein the inner surface (49A) has an inner curvature radius and the circumferential protrusion (49) has a curved outside surface (49B) with an outer curvature radius, the inner curvature radius being smaller than outer curvature radius (RB).

7. Drinking nipple according to any one of claims 1 to 6, wherein the drinking nipple has a positioning element (43) indicating that the gasket is correctly assembled on the drinking nipple and/or that the drinking nipple is correctly inserted into a supply pipe, in particular wherein the drinking nipple has a lower part (42) designed to protrude from the pipe when the drinking nipple is mounted to the supply pipe, the upper part (41) and the lower part (42) being connected by an annular edge or flange (43) extending radially from the housing.

8. Drinking nipple according to any of claims 1 to 7, wherein a diameter of the cartridge can be chosen to adapt to a chosen flow.

9. Drinking nipple according to claim 8, wherein the protective means is a protection arrangement (46A), wherein the protection arrangement comprises at least one flexible arms (46A) partly covering the supply portion, provided at a vertical distance from the upper end (46) and providing a central passage (46B) of diameter less than the cartridge diameter and which can be opened by a force exerted during insertion or removal of the flow control element.

10. Drinking nipple according to any one of the preceding claims, wherein
the valve (20) comprises a ball (32) designed to block the flow of water and a valve pin (22),
the housing comprises a bush (25) having inner ends defining a conical valve seat (26) on which the ball rests, a hollow bush body (27) extending between said inner ends (26) and the outlet (16), and an annular edge (28) extending radially inwards towards the water passage at the outlet (16),
wherein the valve pin (22) is movably inserted in the bush (27), the valve pin having an enlarged head (23) and a pin body (24) extending from the enlarged head (23) and protruding externally from the bush (25).

11. Drinking nipple according to claim 10, wherein, in a closed position of the valve, the enlarged head (23) of the valve pin rests on the annular edge (28) and the ball rests on the ball receiving seat (26), and wherein the valve (20) is opened by raising and/or tilting the valve pin (22) to at least partly lift the enlarged head (23) off said annular edge.

12. Drinking nipple according to claim 10 or 11, in which at least one of the ball, the bush and the valve pin are made of stainless steel.

13. Drinking nipple according to any of the preceding claims, wherein at least one among the cartridge and the housing is made of a thermoplastic material with an antibacterial agent, or wherein the antibacterial agent is in the mass of the thermoplastic material.

## Patentansprüche

1. Trinknippel (10) zum Einsetzen in eine Versorgungsleitung, umfassend
ein Gehäuse (12), das sich entlang einer Körperlängsachse erstreckt, wobei das Gehäuse ein längliches Durchgangsloch (14) aufweist, das einen Wasserdurchgang zwischen einem Einlass (15) und einem Auslass (16) bildet, wobei das Gehäuse einen oberen Teil zum Einsetzen in die Versorgungsleitung für den Einlass von Wasser aufweist,
ein Ventil (20) innerhalb des Gehäuses (12), das dazu ausgelegt ist, den Fluss von Wasser durch das Durchgangsloch (14) zu blockieren,
ein Flusssteuerelement (39), das in das Gehäuse oberhalb des Ventils (20) eingesetzt ist, eine äußere kreisförmige Dichtungs- und Haltefuge (45) an dem oberen Teil des Gehäuses,
**dadurch gekennzeichnet, dass**
das Flusssteuerelement (39) eine Kartusche ist, die entfernbar in das Gehäuse eingesetzt ist, und Schutzmittel an einem oberen Ende der äußeren kreisförmigen Dichtungs- und Haltefuge (45) bereitgestellt sind, die die Kartusche in dem Gehäuse (12) halten, um ein Herausfallen oder eine Beschädigung der Kartusche während des Transports und der Installation zu vermeiden.

2. Trinknippel nach Anspruch 1, wobei die äußere kreisförmige Dichtungsfuge (45) einen Fugeskörper aufweist, der sich zwischen dem oberen Ende (46) zum Einsetzen in eine Versorgungsleitung und einem unteren Ende (47) mit einer Unterkante (48) erstreckt, wobei die Unterkante (48) eine obere Außenfläche (48A), die bereitgestellt ist, um an der Außenfläche einer Leitungswand anzuliegen, und eine untere Außenfläche (48B) aufweist, die bereitgestellt ist, um an dem Trinknippelgehäuse (12) anzuliegen, das innerhalb der kreisförmigen fuge (45) eingesetzt ist.

3. Trinknippel nach Anspruch 1 oder 2, wobei die äußere kreisförmige Dichtungs- und Haltefuge (45) einen Umfangsvorsprung (49) aufweist, der sich von dem Fugeskörper radial nach außen erstreckt, insbesondere wobei der Umfangsvorsprung ein Halteelement ist, das den Trinknippel an Ort und Stelle hält, wenn der Trinknippel in eine Versorgungsleitung eingesetzt ist.

4. Trinknippel nach Anspruch 3, wobei der Umfangsvorsprung (49) in einem Abstand von der oberen Außenfläche (48A) der Unterkante (48) angeordnet ist, der einer Dicke der Versorgungsleitungswand entspricht, in die der Trinknippel einzusetzen ist.

5. Trinknippel nach einem der Ansprüche 2 bis 4, wobei der Umfangsvorsprung (49) ein gekrümmtes Profil mit einer konvexen Innenfläche (49A) aufweist, die eine innere Nut bildet.

6. Trinknippel nach Anspruch 5, wobei die Innenfläche (49A) einen inneren Krümmungsradius aufweist und der Umfangsvorsprung (49) eine gekrümmte Außenfläche (49B) mit einem äußeren Krümmungsradius aufweist, wobei der innere Krümmungsradius kleiner als der äußere Krümmungsradius (RB) ist.

7. Trinknippel nach einem der Ansprüche 1 bis 6, wobei der Trinknippel ein Positionierungselement (43) aufweist, das anzeigt, dass die Fuge korrekt an dem Trinknippel montiert ist und/oder dass der Trinknippel korrekt in eine Versorgungsleitung eingesetzt ist, insbesondere wobei der Trinknippel einen unteren Teil (42) aufweist, der dazu ausgelegt ist, von der Leitung vorzustehen, wenn der Trinknippel an der Versorgungsleitung montiert ist, wobei der obere Teil (41) und der untere Teil (42) durch eine ringförmige Kante oder einen Flansch (43) verbunden sind, die sich radial von dem Gehäuse erstrecken.

8. Trinknippel nach einem der Ansprüche 1 bis 7, wobei ein Durchmesser der Kartusche ausgewählt werden kann, um sich an einen ausgewählten Fluss anzupassen.

9. Trinknippel nach Anspruch 8, wobei das Schutzmittel eine Schutzanordnung (46A) ist, wobei die Schutzanordnung mindestens einen flexiblen Arm (46A) umfasst, der den Versorgungsabschnitt teilweise abdeckt, in einem vertikalen Abstand von dem oberen Ende (46) bereitgestellt ist und einen zentralen Durchgang (46B) mit einem Durchmesser bereitstellt, der kleiner als der Kartuschendurchmesser ist, und der durch eine Kraft geöffnet werden kann, die während des Einsetzens oder Entfernens des Flusssteuerelements ausgeübt wird.

10. Trinknippel nach einem der vorhergehenden Ansprüche, wobei das Ventil (20) eine Kugel (32), die dazu ausgelegt ist, den Fluss von Wasser zu blockieren, und einen Ventilstift (22) umfasst,
das Gehäuse eine Buchse (25) mit inneren Enden, die einen konischen Ventilsitz (26) definieren, auf dem die Kugel ruht, einen hohlen Buchsenkörper (27), der sich zwischen den inneren Enden (26) und dem Auslass (16) erstreckt, und eine ringförmige Kante (28), die sich radial nach innen zu dem Wasserdurchgang an dem Auslass (16) erstreckt, umfasst,
wobei der Ventilstift (22) beweglich in die Buchse (27) eingesetzt ist, wobei der Ventilstift einen vergrößerten Kopf (23) und einen Stiftkörper (24) aufweist, der sich von dem vergrößerten Kopf (23) erstreckt und von der Buchse (25) nach außen vorsteht.

11. Trinknippel nach Anspruch 10, wobei in einer geschlossenen Position des Ventils der vergrößerte Kopf (23) des Ventilstifts auf der ringförmigen Kante (28) ruht und die Kugel auf dem Kugelaufnahmesitz (26) ruht, und wobei das Ventil (20) durch Anheben und/oder Kippen des Ventilstifts (22) geöffnet wird, um den vergrößerten Kopf (23) mindestens teilweise von der ringförmigen Kante abzuheben.

12. Trinknippel nach Anspruch 10 oder 11, wobei mindestens eines von der Kugel, der Buchse und dem Ventilstift aus rostfreiem Stahl hergestellt ist.

13. Trinknippel nach einem der vorhergehenden Ansprüche, wobei mindestens eines von der Kartusche und dem Gehäuse aus einem thermoplastischen Material mit einem antibakteriellen Mittel hergestellt ist, oder wobei das antibakterielle Mittel in der Masse des thermoplastischen Materials vorliegt.

## Revendications

1. Tétine à boire (10) destinée à être insérée dans un tuyau d'alimentation, comprenant un boîtier (12) s'étendant le long d'un axe de corps longitudinal, le boîtier ayant un trou traversant longitudinal (14) formant un passage d'eau entre une entrée (15) et une sortie (16), le boîtier ayant une partie supérieure destinée à être insérée dans le tuyau d'alimentation pour l'entrée d'eau,
une soupape (20) à l'intérieur du boîtier (12), conçue pour bloquer l'écoulement d'eau à travers le trou traversant (14),
un élément de contrôle d'écoulement (39) inséré dans le boîtier au-dessus de la soupape (20),
un joint d'étanchéité et de maintien circulaire externe (45) sur la partie supérieure du boîtier,
**caractérisée en ce que**
l'élément de contrôle d'écoulement (39) est une cartouche qui est insérée de manière amovible dans le boîtier, et des moyens de protection sont prévus au niveau d'une extrémité supérieure du joint d'étanchéité et de maintien circulaire externe (45) qui maintiennent la cartouche dans le boîtier (12) pour éviter la chute ou l'endommagement de la cartouche pendant le transport et l'installation.

2. Tétine à boire selon la revendication 1, dans laquelle le joint d'étanchéité circulaire externe (45) a un corps de joint s'étendant entre l'extrémité supérieure (46) destinée à être insérée dans un tuyau d'alimentation et une extrémité inférieure (47) avec un bord inférieur (48), dans laquelle le bord inférieur (48) a une surface externe supérieure (48A) prévue pour reposer contre la surface externe d'une paroi de tuyau et une surface externe inférieure (48B) prévue pour venir en butée contre le boîtier de tétine à boire (12) inséré à l'intérieur du joint d'étanchéité circulaire (45).

3. Tétine à boire selon la revendication 1 ou 2, dans laquelle le joint d'étanchéité et de maintien circulaire externe (45) a une saillie circonférentielle (49) s'étendant radialement vers l'extérieur à partir du corps de joint, en particulier dans laquelle la saillie circonférentielle est un élément de maintien maintenant la tétine à boire en place lorsque la tétine à boire est insérée dans un tuyau d'alimentation.

4. Tétine à boire selon la revendication 3, dans laquelle la saillie circonférentielle (49) est située à une distance de la surface externe supérieure (48A) du bord inférieur (48) correspondant à une épaisseur de la paroi de tuyau d'alimentation dans laquelle la tétine à boire doit être insérée.

5. Tétine à boire selon l'une quelconque des revendications 2 à 4, dans laquelle la saillie circonférentielle (49) a un profil incurvé avec une surface interne convexe (49A) formant une rainure interne.

6. Tétine à boire selon la revendication 5, dans laquelle la surface interne (49A) a un rayon de courbure interne et la saillie circonférentielle (49) a une surface externe incurvée (49B) avec un rayon de courbure externe, le rayon de courbure interne étant plus petit que le rayon de courbure externe (RB).

7. Tétine à boire selon l'une quelconque des revendications 1 à 6, dans laquelle la tétine à boire a un élément de positionnement (43) indiquant que le joint est correctement assemblé sur la tétine à boire et/ou que la tétine à boire est correctement insérée dans un tuyau d'alimentation, en particulier dans laquelle la tétine à boire a une partie inférieure (42) conçue pour faire saillie à partir du tuyau lorsque la tétine à boire est montée sur le tuyau d'alimentation, la partie supérieure (41) et la partie inférieure (42) étant reliées par un bord ou une bride annulaire (43) s'étendant radialement à partir du boîtier.

8. Tétine à boire selon l'une quelconque des revendications 1 à 7, dans laquelle un diamètre de la cartouche peut être choisi pour s'adapter à un écoulement choisi.

9. Tétine à boire selon la revendication 8, dans laquelle les moyens de protection sont un agencement de protection (46A), dans laquelle l'agencement de protection comprend au moins un bras flexible (46A) recouvrant partiellement la partie d'alimentation, prévu à une distance verticale de l'extrémité supérieure (46) et fournissant un passage central (46B) de diamètre inférieur au diamètre de la cartouche et qui peut être ouvert par une force exercée pendant l'insertion ou le retrait de l'élément de contrôle d'écoulement.

10. Tétine à boire selon l'une quelconque des revendications précédentes, dans laquelle la soupape (20) comprend une bille (32) conçue pour bloquer l'écoulement d'eau et une goupille de soupape (22),
le boîtier comprend une douille (25) ayant des extrémités internes définissant un siège de soupape conique (26) sur lequel la bille repose, un corps de douille creux (27) s'étendant entre lesdites extrémités internes (26) et la sortie (16), et un bord annulaire (28) s'étendant radialement vers l'intérieur vers le passage d'eau au niveau de la sortie (16), dans laquelle la goupille de soupape (22) est insérée de manière mobile dans la douille (27), la goupille de soupape ayant une tête élargie (23) et un corps de goupille (24) s'étendant à partir de la tête élargie (23) et faisant saillie à l'extérieur de la douille (25).

11. Tétine à boire selon la revendication 10, dans laquelle, dans une position fermée de la soupape, la tête élargie (23) de la goupille de soupape repose sur le bord annulaire (28) et la bille repose sur le siège de réception de bille (26), et dans laquelle la soupape (20) est ouverte en soulevant et/ou en inclinant la goupille de soupape (22) pour soulever au moins partiellement la tête élargie (23) dudit bord annulaire.

12. Tétine à boire selon la revendication 10 ou 11, dans laquelle au moins l'une de la bille, de la douille et de la goupille de soupape est réalisée en acier inoxydable.

13. Tétine à boire selon l'une quelconque des revendications précédentes, dans laquelle au moins l'un parmi la cartouche et le boîtier est réalisé en un matériau thermoplastique avec un agent antibactérien, ou dans laquelle l'agent antibactérien est dans la masse du matériau thermoplastique.
